# EUROPEAN PATENT APPLICATION

(11) **EP 4 040 587 A2**
(43) Date of publication of application: **10.08.2022**
(21) Application number: 22154614.6
(22) Date of filing: 01.02.2022
(51) Int. Cl.: H01M 50/367, H01M 50/211

(54) **BATTERY PACK**

(30) Priority: 08.02.2021 KR 20210017854
(71) Applicant: SK On Co., Ltd., Seoul 03188 (KR)
(72) Inventor: HWANG, Jae Il, 34124 Daejeon (KR); HAN, Jin Su, 34124 Daejeon (KR); KANG, Min Song, 34124 Daejeon (KR); KU, Bon Seok, 34124 Daejeon (KR); JUNG, Jun Hee, 34124 Daejeon (KR); CHO, Sei Hoon, 34124 Daejeon (KR)
(74) Representative: Stolmár & Partner Patentanwälte PartG mbB

(57) **Abstract**

A battery pack includes a cell group including a number of secondary battery cells; a frame accommodating the cell group therein; and a bracket coupled to the frame, linked to the cell group to fix the cell group to the frame, and defining a vent space together with the frame to form a path, through which flames or gas are discharged, when the flames or the gas is generated in one of the secondary battery cells.

## Description

### CROSS-REFERENCE TO RELATED APPLICATION

The present application claims priority to Korean Patent Application No. 10-2021-0017854 filed February 8, 2021, the disclosure of which is hereby incorporated by reference in its entirety.

### BACKGROUND OF THE INVENTION

### 1. Field of the Invention

The present disclosure relates to a battery pack.

### 2. Description of Related Art

With the increase in technological development and demand for mobile devices, electric vehicles, and the like, demand for secondary battery cells as an energy source is rapidly increasing. A secondary battery cell can be repeatedly charged and discharged because mutual conversion between chemical energy and electrical energy is reversible.

A plurality of battery modules, each including a plurality of secondary battery cells, may be mounted in an electric vehicle, or the like, to be installed as a battery pack.

Recently, a cell-to-pack (CTP) technology has been proposed. According to the CTP technology, when such a secondary battery cell is installed in an electric vehicle or the like, the secondary battery cell may be directly installed in the electric vehicle, or the like, to form a battery pack without a process of installing the secondary battery cell after being manufactured as a battery module.

A secondary battery cell may be repeatedly charged and discharged, generating heat. An increase in temperature of such a secondary battery cell may cause explosion of a certain secondary battery cell. Alternatively, an external impact may cause explosion of a certain secondary battery cell.

Accordingly, there is a need for a discharging configuration for discharging flame, gas, and the like, generated in a battery pack, to an outside of the battery pack.

In addition, a fixing configuration for fixing a plurality of secondary battery cells to a battery pack is required. However, such a fixing configuration may be separately provided to occupy a space in the battery pack, so that energy density may be reduced.

To overcome the above-mentioned issues and limitations, research into a battery pack is required.

### SUMMARY OF THE INVENTION

An aspect of the present disclosure is to provide a battery pack including a secondary battery cell directly installed in an automobile, or the like, and securing, including, defining, or providing a vent space from which flames or gas, generated by an explosion of the secondary battery cell, may be smoothly discharged.

Another aspect of the present disclosure is to provide a battery pack including a secondary battery cell directly installed in an automobile, or the like, and providing a multipurpose configuration for fixing a plurality of secondary battery cells to the battery pack while securing, including, defining, or providing a vent space from which flames or gas, generated by an explosion of the secondary battery cell, may be smoothly discharged.

According to an aspect of the present disclosure, a battery pack includes: a cell group including a plurality of secondary battery cells; a frame accommodating the cell group therein; and a bracket coupled to the frame, linked to the cell group to fix the cell group to the frame, and defining a vent space together with the frame to form a path, through which flames or gas are discharged, when the flames or the gas is generated in one of the plurality of secondary battery cells.

The frame may include: a lower frame, on which the cell group is seated, facing a lower portion of the cell group; a side frame having a lower end coupled to the lower frame, surrounding or enclosing the cell group, e.g., around the sides thereof or in a circumferential direction, and forming the vent space together with the bracket; and an upper frame coupled to an upper portion of the side frame and facing an upper portion of the cell group.

The side frame may include: a first side frame disposed on one side of the cell group; and a second side frame disposed on the other side of the cell group. The bracket may be disposed between the second side frame and the other side of the cell group to form the other portion of the vent space together with the second side frame.

The bracket may include: a support plate facing the other side of the cell group; and a first upper flange provided on an upper end of the support plate and fastened to the second side frame.

The first upper flange may be fastened to the upper frame.

The bracket may include: a first lower flange, provided on a lower end of the support plate to extend in a direction of the second side frame, in which a support hole, into which a protruding pin fixed to the lower frame is inserted, is formed.

The bracket may include: a second lower flange provided on a lower end of the support plate to extend in a direction of the cell group.

The bracket may include: a second upper flange provided on an upper end of the support plate to extend in the direction of the cell group.

The support plate may be provided with a communication hole through which the vent space and a space, in which the cell group is disposed, communicate with each other.

The support plate may be provided with a plurality of beads formed in direction intersecting each other.

A thermal conductive material may be applied to an upper portion of the lower frame, and the plurality of secondary battery cells may be brought into contact with the thermal conductive material to be seated on the lower frame.

The cell group may include: a bus bar to which electrode leads of the plurality of secondary battery cells are coupled; an end cover plate connected to the bus bar and the bracket; and a side plate covering outermost sides of the plurality of secondary battery cells.

The bus bar and the bracket may be disposed parallel to each other.

### BRIEF DESCRIPTION OF THE DRAWINGS

The above and other aspects, features, and advantages of the present disclosure will be more clearly understood from the following detailed description, taken in conjunction with the accompanying drawings.
FIG. 1 is a side view illustrating an example of a battery pack according to the present disclosure.
FIG. 2 is an enlarged side view of portion "A" of FIG. 1.
FIG. 3 is a perspective view illustrating an example of a battery pack according to the present disclosure.
FIG. 4 is a perspective view illustrating a cell group, to which a bracket is coupled, is removed from a frame, in an example of a battery back according to the present disclosure.
FIG. 5 is a perspective view illustrating a bracket supported by a protruding pin, in an example of a battery pack according to the present disclosure.
FIGS. 6A to 6D are side views illustrating various examples of a bracket, in a battery pack according to the present disclosure.
FIG. 7 is a perspective view illustrating a bracket and a disassembled cell group, in an example of a battery pack according to the present disclosure.

### DESCRIPTION OF THE INVENTION

Hereinafter, embodiments of the present disclosure will be described in detail with reference to the accompanying drawings.

All the terms used in this specification including technical and scientific terms have the same meanings as would be generally understood by those skilled in the related art. However, these terms may vary depending on the intentions of the person skilled in the art, legal or technical interpretation, and the emergence of new technologies. In addition, some terms are arbitrarily selected by the applicant. These terms may be construed in the meaning defined herein and, unless otherwise specified, may be construed on the basis of the entire contents of this specification and common technical knowledge in the art.

In addition, the same reference numerals as used in the accompanying drawings denote parts or components performing substantially the same function. For ease of explanation and understanding, different embodiments will be described using the same reference numerals. In other words, even though all the elements having the same reference numerals are shown in the plural drawings, the plural drawings do not mean one embodiment.

The terms such as "first", "second", and so on may be used to describe a variety of elements, but the elements should not be limited by these terms. The terms are used simply to distinguish one element from other elements. The use of such ordinal numbers should not be construed as limiting the meaning of the term. For example, the components associated with such an ordinal number should not be limited in the order of use, placement order, or the like. If necessary, each ordinal number may be used interchangeably.

The singular expression also includes the plural meaning as long as it does not differently mean in the context. In this specification, terms such as 'include' and 'have/has' should be construed as designating that there are such characteristics, numbers, operations, elements, components or a combination thereof in the specification, not to exclude the existence or possibility of adding one or more of other characteristics, numbers, operations, elements, components or a combination thereof.

When an element is referred to as being "connected" or "coupled" to another element, it can be directly connected or coupled to the another element or be indirectly connected or coupled to the another element with one or more intervening elements interposed therebetween. In addition, when an element is referred to as "including" a component, this indicates that the element may further include another component instead of excluding another component unless there is different disclosure.

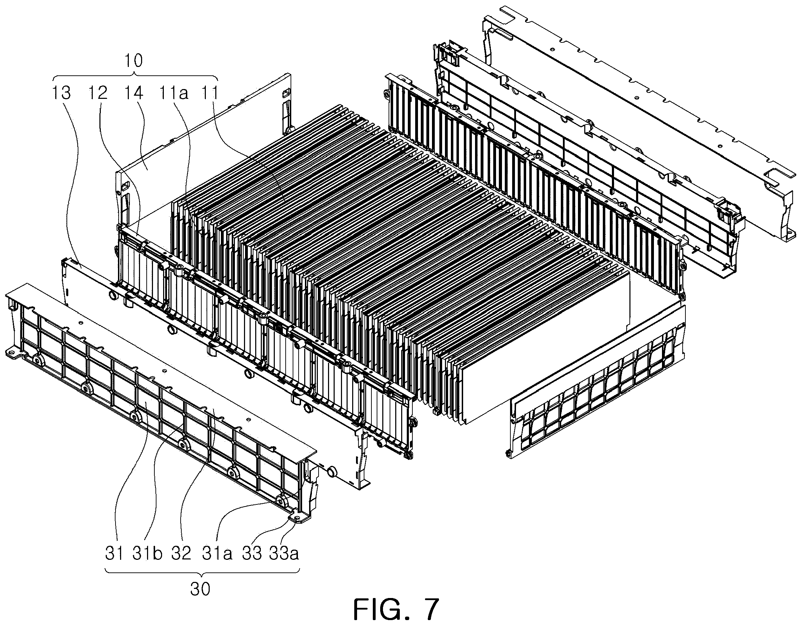

The present disclosure relates to a battery pack. A battery pack, including a secondary battery cell 11 (see e.g., FIG. 7) directly installed in an automobile, or the like, may secure, include, define, or provide a vent space "B" from which flames or gas, generated by an explosion of the secondary battery cell 11, may be smoothly discharged.

In another aspect, the present disclosure may propose a battery pack including a secondary battery cell 11 directly installed in an automobile, or the like, and providing a multipurpose configuration for fixing a plurality of secondary battery cells 11 to the battery pack while securing, including, defining, or providing a vent space "B" from which flames or gas, generated by an explosion of the secondary battery cell 11, may be smoothly discharged.

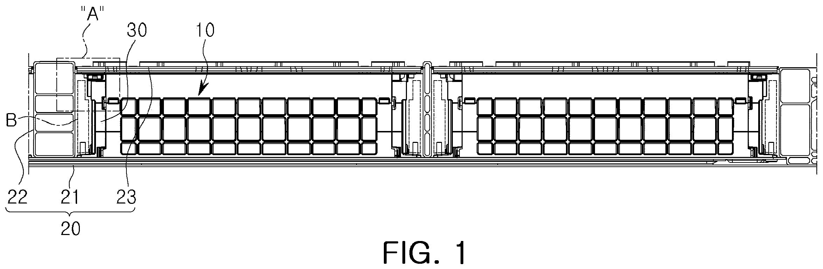

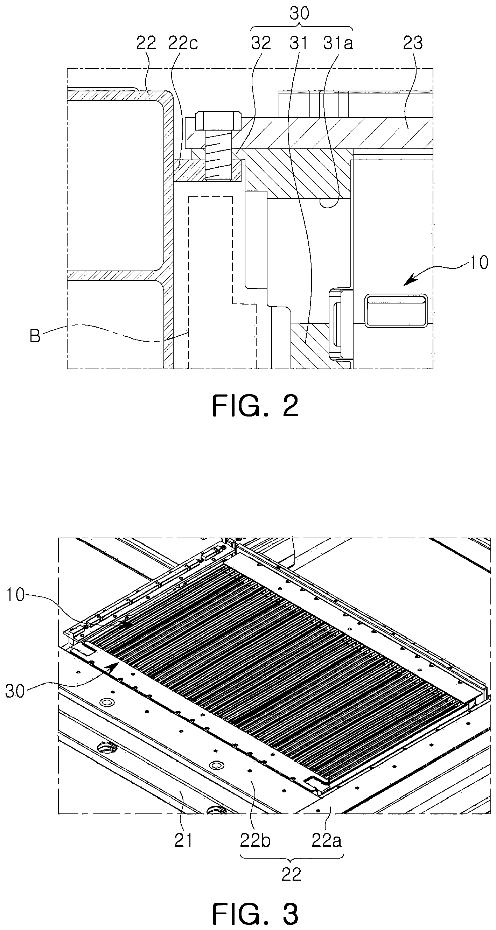

In an example, FIG. 1 is a side view illustrating an example of a battery pack according to the present disclosure, and FIG. 3 is a perspective view illustrating an example of a battery pack according to the present disclosure. Referring to the drawings, a battery pack according to an embodiment of the present disclosure may include a cell group 10, a frame 20, and a bracket 30.

The cell group 10 may include a plurality of secondary battery cells 11 (see e.g., FIG. 7) . The frame 20 may accommodate, receive, or hold the cell group 10 therein. The bracket 30 may be coupled to the frame 20, and may affix the cell group 10 to the frame 20. When flames or gas are generated in one of the plurality of secondary battery cells 11, the bracket 30 may form a vent space "B" together with the frame 20 to form a path through which the flames or the gas is discharged.

As described above, the bracket 30 may be linked to the cell group 10 and coupled to the frame 20 to fix the cell group 10 to the frame 20. As an example, the bracket 30 may be coupled to the cell group 10 to couple the cell group 10 to the frame 20. Alternatively, the bracket 30 may be configured such that the cell group 10 is coupled to and prevented from being removed from the bracket 30, and thus, may fix the cell group 10 to the frame 20 without removing the cell group 10 therefrom.

The bracket 30 may also form a vent space "B" together with the frame 20. That is, the bracket 30 may be a multipurpose configuration serving not only to form the vent space "B" and but also to fix the cell group 10 including the plurality of secondary battery cells 11.

Accordingly, a reduction in energy density may be prevented from occurring when a configuration for forming a space for ventilation and a configuration for fixing a secondary battery cell are separately provided. That is, the battery cell according to the present disclosure may include the bracket 30 configured to reduce the space occupied by the bracket 30 for forming the vent space "B" while fixing the cell group 10. Thus, a relatively large number of secondary battery cells 11 may be installed to increase the energy density.

As an example, the bracket 30 may be formed of a material, such as a metal, a resin, a composite, a fiber reinforcing composite, having heat resistance, fire resistance, and rigidity of about 0.5 GPa or more. This is aimed at securing or providing rigidity to fix the cell group 10 to the frame 20 while allowing the bracket 30 to form the vent space "B." The bracket 30 may also be prepared by a post-processing treatment such as coating or heat treatment for improving heat resistance, fire resistance, strength, and rigidity.

In addition, to increase energy capacity, the plurality of secondary battery cells 11 constituting the cell group 10 may be seated on a lower frame 21 of the battery pack without a separate structure. In this case, a thermal conductive material may be interposed between the secondary battery cell 11 and the lower frame 21 to improve heat dissipation performance of the secondary battery cells 11. For example, the secondary battery cells 11 may be directly seated in a lower portion of the battery pack without a separate lower module case accommodating the secondary battery cells 11 therein, so a volume of the secondary battery cells 11 may be relatively increased. As a result, the energy capacity may be increased.

For example, the thermal conductive material may be applied to an upper portion of the lower frame 21 of the battery pack according to an embodiment and the plurality of secondary battery cells 11 may be brought into contact with the thermal conductive material to be seated on the lower frame 21.

As discussed above, the cell group 10 may include a plurality of secondary battery cells 11. The cell group 10 may also include a bus bar 12, an end cover plate 13, a side plate 14, and the like. The details thereof will be described later with reference to FIG. 7 .

The secondary battery cells 11 may include an electrode assembly and a cell body surrounding the electrode assembly.

The electrode assembly may be received in the cell body while substantially containing an electrolyte. The electrolyte may include lithium salt, such as LiPF6 or LiBF4, in an organic solvent such as ethylene carbonate (EC), propylene carbonate (PC), diethyl carbonate (DEC), ethyl methyl carbonate (EMC), or dimethyl carbonate (DMC) . The electrolyte may be in a liquid, solid, or gel state.

The cell body may be configured to protect the electrode assembly and contain the electrolyte. As an example, the cell body may be provided as a pouch-type member or a can-type member. In an example, the pouch-type member may accommodate the electrode assembly therein and may be configured to be sealed on three sides, including an upper surface and side surfaces which may be bonded to seal the electrode assembly therein. In another example, the can-type member may accommodate the electrode assembly and may be sealed on a first side. The can-type member may be a member configured such that a first side, other than three sides (a lower surface and side surface) may be folded and bonded to seal the electrode assembly therein.

However, such pouch-type secondary battery cells 11 and such can-type secondary battery cells 11 are only examples of a secondary battery cell 11 that may be accommodated in the battery pack according to the present disclosure. The secondary battery cells 11, accommodated in the battery pack according to the present disclosure, is not limited to the above examples, and a four-side-sealing type secondary battery cell 11, or the like, may be accommodated in the battery pack according to the present disclosure.

The frame 20 may accommodate or receive the cell group 10. In addition, the frame 20 may hermetically seal or receive a periphery of the cell group 10 to prevent flames or gas, generated by an explosion of one of the secondary battery cells 11 included in the cell group 10, from being directly discharged to an outside of the frame 20. In an example, the flames or the gas may be induced to flow into the vent space "B" formed by the frame 20 and the bracket 30, and then may be discharged to the outside of the frame 20.

In addition, the frame 20 may accommodate or receive a plurality of cell groups 10 in a plurality of compartments, e.g., one cell group 10 per compartment, respectively sealing the plurality of cell groups 10.

In an example, the frame 20 of the battery pack according to an embodiment may include a lower frame 21, a side frame 22, and an upper frame 23.

The lower frame 21 may be disposed to seat each cell group 10 thereon, and may be configured to face a lower of the cell group 10. The side frame 22 may have a lower end coupled to the lower frame 21, may surround or enclose the cell group 10, e.g., around the sides thereof or in a circumferential direction, and may form the vent space "B" together with the bracket 30. The upper frame 23 may be coupled to an upper end of the side frame 22, and may be configured to face an upper portion of the cell group 10.

In an example, the frame 20 may include the lower frame 21, the side frame 22, and the upper frame 23 which together define a hermetically sealed internal space in which the cell group 10 is accommodated or received.

The lower frame 21 may be a configuration on which the plurality of cell groups 10 may be seated. In addition, the lower frame 21 may be divided into a plurality of regions by the side frame 22 to respectively isolate the plurality of cell groups 10 from each other. For example, the lower frame 21 may be a single frame on which all of the cell groups 10 are seated, but may be divided into a plurality of regions, in which the cell groups 10 are respectively accommodated, by the side frame 22, e.g., one cell group 10 per region.

In an example, the lower frame 21 may be provided below a boarding region of an automobile frame.

The side frame 22 may be configured to surround a periphery of each cell group 10. To this end, a lower end of the side frame 22 may be coupled to an upper surface of the lower frame 21. In addition, the side frame 22 may be configured to divide the lower frame 21 into a plurality of regions.

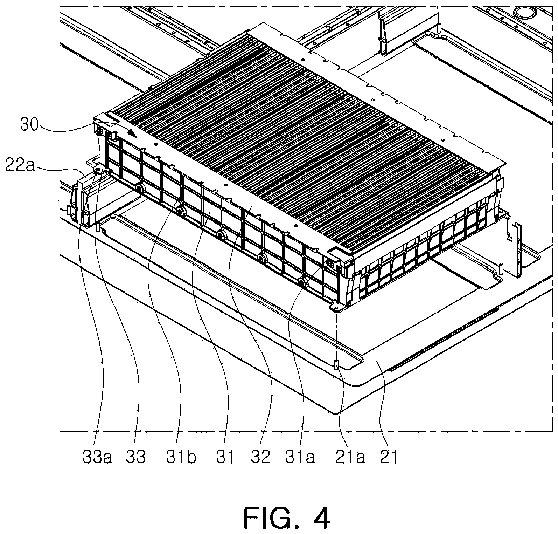

Referring to FIGS 3 and 4, in an example, the side frame 22 may be disposed or configured to form a plurality of rectangular regions on the upper surface of the lower frame 21.

In an example, one portion or side of the side frame 22 may be configured to be in close contact with the cell group 10, but another portion or side thereof may be in close contact with the bracket 30 and may be spaced apart from the cell group 10 by a predetermined distance.

In an example, e.g., shown in FIG. 3, the side frame 22 may include a first side frame 22a and a second side frame 22b.

The first side frame 22a is configured to be disposed on one side, e.g., a first side, of the cell group 10. The second side frame 22b may be configured to be disposed on the other side, e.g., a second side, of the cell group 10. In an example, the second side frame 22b may face the second side of the cell group 10 adjacent or proximate to the first side of the cell group 10, and may be disposed or configured to be spaced apart from the second side of the cell group 10 by a predetermined distance.

The bracket 30 may be disposed between the second side frame 22b and the second side of the cell group 10, and may form the vent space "B" together with the second side frame 22b. For example, when the second side frame 22b forms a portion of the vent space "B", the bracket 30 may form another portion of the vent space "B."

Accordingly, the bracket 30 may perform a function of coupling the cell group 10 to the frame 20 and a function of forming the vent space "B", as a single configuration.

The upper frame 23 may cover an upper portion of the secondary battery cells 11 forming a cell group 10 to seal an internal space of the compartment.

To this end, the upper frame 23 may be coupled to an upper end of the side frame 22 and an upper end of the bracket 30. Such a coupling structure will be described later in detail with reference to FIGS. 2 and 4.

FIG. 2 is an enlarged side view of portion "A" of FIG. 1, and FIG. 4 is a perspective view illustrating a cell group 10, to which a bracket 30 is coupled, removed from a frame 20, in an example of a battery back according to the present disclosure.

Referring to FIGS. 1 - 5, in an example, the bracket 30 of the battery pack according to an embodiment may include a support plate 31 in contact with a side surface of the other (or second) side of the cell group 10 and a first upper flange 32 provided on an upper end of the support plate 31 and fastened to the second side frame 22b.

In an example, the bracket 30 may be provided with an first upper flange 32 to be coupled to the frame 20.

In an example, the first upper flange 32 may be provided on the upper end of the support plate 31 to extend in a direction of the second side frame 22b (FIG. 4), and may be fastened to a frame tab 22c (FIG. 2) of the second side frame 22b protruding in a direction of the cell group 10.

The first upper flange 32 may be bolt-coupled to the frame tab 22c of the second side frame 22b of the frame 20. Accordingly, the cell group 10 linked to the bracket 30 may also be fixed to the frame 20.

The bracket 30 may be coupled to the second side frame 22b to form the vent space "B" together with the second side frame 22b.

The first upper flange 32 may be coupled to the upper frame 23. For example, the first upper flange 32 of the battery pack according to an embodiment may be fastened to the upper frame 23.

In an example, the first upper flange 32, the second side frame 22b, and the upper frame 23 may be fastened to each other with a single bolt. Accordingly, in this example, the number of times of bolt coupling may be decreased, so that a coupling process time may be reduced.

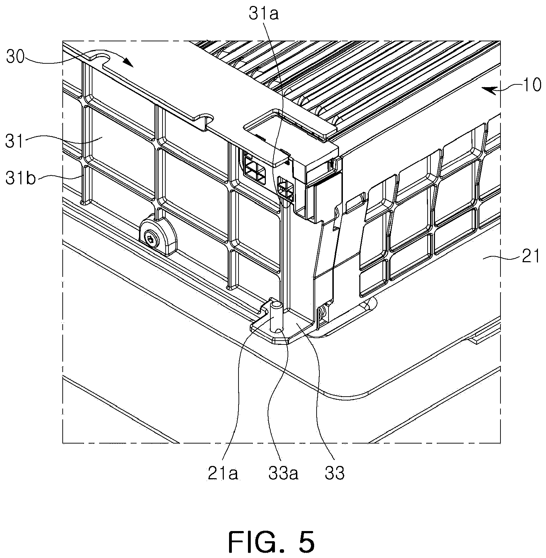

As shown for example in FIG. 5, the support plate 31 of the battery pack according to an embodiment may have a communication hole 31a through which the vent space "B" and a space, in which the cell group 10 is disposed, communicate with each other.

In an example, the communication hole 31a may be formed in the support plate 31 to discharge flames or gas, generated by an explosion of one of the secondary battery cells 11 included in the cell group 10, to the vent space "B". For example, the flames or the gas entering the vent space "B" may exit the vent space "B" through the communication hole 31a.

In the support plate 31 of the battery pack according to an embodiment, a plurality of rigid beads, ribs, or ridges 31b may be formed in directions intersecting each other.

Such rigid beads, ribs, or ridges, 31b may reinforce rigidity of the support plate 31 to effectively maintain the vent space "B" formed by the bracket 30.

In an example, the rigid beads, ribs, or ridges 31b may be formed to protrude and extend upwardly or away from the surface of the support plate 31, and may be formed in checkered patterns intersecting each other.

FIG. 5 is a perspective view illustrating a state in which a bracket 30 is supported by means of a protruding pin 21a, in an example of a battery pack according to the present disclosure. Referring to FIG. 5, the bracket 30 of the battery pack according to an embodiment may be provided on a lower end of the support plate 31 to extend in a direction of the second side frame 22b (see FIG. 3), and may include a first lower flange 33 in which a support hole 33a, into which a protruding pin 21a (see also FIG. 4) fixed to the lower frame 21 is inserted, is formed.

Accordingly, a seating position of the bracket 30 linked to the cell group 10 may be constant, whereupon an assembly tolerance of the cell group may be reduced.

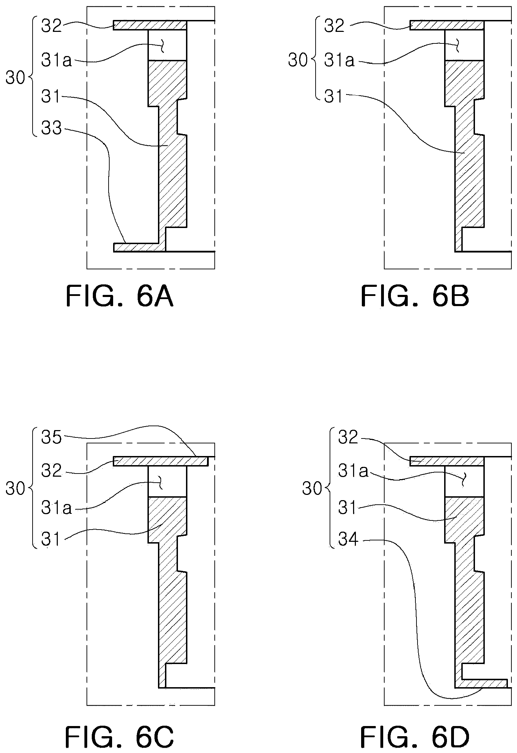

FIGS. 6A to 6D are side views illustrating various examples of a bracket 30, in a battery pack according to the present disclosure. FIG. 6A is a schematic view illustrating an example in which the bracket 30 includes a support plate 31, a first upper flange 32, and a first lower flange 33. The example illustrated in FIG. 6A is an overall "["-shaped example. FIG. 6B is a schematic view illustrating an example in which the bracket 30 includes only a support plate 31 and a first upper flange 32. The example illustrated in FIG. 6B is an overall "¬"-shaped example, and may constitute the bracket 30 with a lighter weight than the case including the first lower flange 33 and second upper and lower flanges 35 (FIG. 6C) and 34 (FIG. 6D) to be described later.

FIG. 6C is a schematic view illustrating an example in which the bracket 30 includes a support plate 31, a first upper flange 32, and a second upper flange 35. The example illustrated in FIG. 6C is an overall "T"-shaped example. FIG. 6D is a schematic view illustrating an example in which the bracket 30 includes a support plate 31, a first upper flange 32, and a second lower flange 34. The example illustrated in FIG. 6D is an overall "Z"-shape example.

Referring to FIG. 6D, the bracket 30 of the battery pack according to an embodiment may include the second lower flange 34 provided on a lower end of the support plate 31 to extend in a direction of the cell group 10.

The lower flange 34 may support a bottom surface of the cell group 10 linked to the bracket 30. Accordingly, transportation and movement of the cell group 10, linked to the bracket 30, may be facilitated.

In addition, as shown in FIG. 6C the bracket 30 of the battery pack according to an embodiment may include a second upper flange 35 (FIG. 6C) provided on an upper end of the support plate 31 to extend in a direction of the cell group 10.

The second lower flange 34 (FIG. 6D) may support an upper surface of the cell group 10 linked to the bracket 30. Accordingly, the cell group 10 linked to the bracket 30 may be prevented from being upwardly removed.

FIG. 7 is an exploded perspective view illustrating a bracket 30 and a disassembled cell group 10, in an example of a battery pack according to the present disclosure.

Referring to FIG. 7, the cell group 10 of the battery pack according to an embodiment may include a bus bar 12 to which electrode leads 11a of the plurality of secondary battery cells 11 of the cell group 10 may be coupled, an end cover plate 13 coupled to the bus bar 12 and the bracket 30, and a side plate 14 covering outermost sides of the plurality of secondary battery cells 11.

As described above, the cell group 10 may include the bus bar 12, the end cover plate 13, and the side plate 14 to pack and accommodate the plurality of secondary battery cells 11 in the frame 20.

In an example, the bus bar 12 may be coupled to the plurality of secondary battery cells 11 to support the plurality of secondary battery cells 11 overall.

In an example, the bus bar 12 may be provided with a plurality of coupling holes to which the electrode leads 11a of the secondary battery cells 11 are mounted and coupled. Thus, all of the secondary battery cells 11 may be coupled to the bus bar 12 by means of the electrode leads 11a.

The bus bar 12 may also be connected to an electrode pair to transfer electric energy, generated in the plurality of secondary battery cells 11, to the electrode pair, and the electrode pair may supply the electric energy to an external device such as an electric vehicle.

In an example, the bus bar 12 of the battery pack according to an embodiment and the bracket 30 may be disposed parallel to each other.

In an example, the end cover plate 13 may serve to cover and protect the bus bar 12, and may be linked to the bracket 30. For example, one surface of the end cover plate 13 may be in contact with the bus bar 12, and the other surface thereof may be in contact with the bracket 30.

The side plate 14 may serve to cover an outermost side of the plurality of secondary battery cells 11. Accordingly, the side plate 14 may serve to protect the secondary battery cell 11.

As described above, a battery pack including a secondary battery cell directly installed in an automobile, or the like, may secure, include, define, or provide a vent space from which flames or gas, generated by an explosion of the secondary battery cell, may be smoothly discharged.

In an example, the battery pack including the secondary battery cell directly installed in an automobile, or the like, may provide a multipurpose configuration for fixing a plurality of secondary battery cells to the battery pack while securing, including, defining, or providing a vent space from which flames or gas, generated by an explosion of the secondary battery cell, may be smoothly discharged. Thus, energy density may be increased.

While exemplary embodiments have been shown and described above, it will be apparent to those skilled in the art that modifications and variations could be made without departing from the scope of the present disclosure as defined by the appended claims.

## Claims

1. A battery pack comprising:
a cell group including a plurality of secondary battery cells;
a frame accommodating the cell group therein; and
a bracket coupled to the frame, linked to the cell group to fix the cell group to the frame, and defining a vent space together with the frame, through which flames or gas are discharged, when the flames or the gas is generated in one of the plurality of secondary battery cells.

2. The battery pack of claim 1, wherein the frame comprises :
a lower frame, on which the cell group is seated, facing a lower portion of the cell group;
a side frame having a lower end coupled to the lower frame, surrounding a side of the cell group, and forming the vent space together with the bracket ; and
an upper frame coupled to an upper portion of the side frame and facing an upper portion of the cell group.

3. The battery pack of claim 2, wherein the side frame comprises:
a first side frame disposed at one side of the cell group; and
a second side frame disposed at the other side of the cell group, and
wherein the bracket is disposed between the second side frame and the other side of the cell group to define a portion of the vent space together with the second side frame.

4. The battery pack of claim 3, wherein the bracket comprises:
a support plate facing the other side of the cell group; and
a first upper flange provided on an upper end of the support plate and fastened to the second side frame.

5. The battery of claim 4, wherein the first upper flange is fastened to the upper frame.

6. The battery pack of claim 4, wherein the bracket comprises:
a first lower flange , provided on a lower end of the support plate , and including a support hole, into which a protruding pin fixed to the lower frame is inserted.

7. The battery pack of claim 4, wherein the bracket comprises:
a second lower flange provided on a lower end of the support plate to extend in a direction of the cell group.

8. The battery pack of claim 4, wherein the bracket comprises:
a second upper flange provided on an upper end of the support plate to extend in the direction of the cell group.

9. The battery pack of claim 4, wherein the support plate is provided with a communication hole through which the vent space and a space, in which the cell group is disposed, communicate with each other.

10. The battery pack of claim 4, wherein the support plate is provided with a plurality of beads formed in direction intersecting each other.

11. The battery pack of claim 2, wherein a thermal conductive material is disposed between an upper portion of the lower frame and the plurality of secondary battery cells.

12. The battery pack of claim 1, wherein the cell group comprises:
a bus bar to which electrode leads of the plurality of secondary battery cells are coupled;
an end cover plate coupled to the bus bar and the bracket ; and
a side plate covering outermost side portions of the plurality of secondary battery cells.

13. The battery pack of claim 12, wherein the bus bar and the bracket are disposed parallel to each other.
